(19) Europäisches Patentamt

European Patent Office

Office européen des brevets

(11) Veröffentlichungsnummer: **0 457 826 B1**

## (12) EUROPÄISCHE PATENTSCHRIFT

(45) Veröffentlichungstag der Patentschrift: **20.07.94**

(21) Anmeldenummer: **90903356.5**

(22) Anmeldetag: **31.01.90**

(86) Internationale Anmeldenummer:
**PCT/EP90/00169**

(87) Internationale Veröffentlichungsnummer:
**WO 90/09533 (23.08.90 90/20)**

(51) Int. Cl.⁵: **F16D 25/0638**, F16D 23/14

(54) **PEDALBETÄTIGBARE KUPPLUNGSEINRICHTUNG.**

(30) Priorität: **08.02.89 DE 3903637**

(43) Veröffentlichungstag der Anmeldung:
**27.11.91 Patentblatt 91/48**

(45) Bekanntmachung des Hinweises auf die
Patenterteilung:
**20.07.94 Patentblatt 94/29**

(84) Benannte Vertragsstaaten:
**AT DE FR IT**

(56) Entgegenhaltungen:
**WO-A-88/07144**
**DE-B- 1 123 567**
**FR-A- 2 210 246**
**GB-A- 2 149 863**

(73) Patentinhaber: **ZF FRIEDRICHSHAFEN Aktiengesellschaft**

**D-88038 Friedrichshafen(DE)**

(72) Erfinder: **BAUR, Erwin**
**Moltkestrasse 32**
**D-7990 Friedrichshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine pedalbetätigbare Kupplungseinrichtung für motorgetriebene Fahrzeuge entsprechend dem Oberbegriff von Patentanspruch 1.

Bei motorgetriebenen landwirtschaftlichen Arbeitsmaschinen, insbesondere Schleppern, kommen infolge der hohen installierten Motorleistungen häufig naß laufende Lamellenkupplungen zum Einsatz. Um das Schleppmoment dieser Kupplungen beim Synchronisieren klein zu halten, ist ein großer Lüftweg notwendig. Wegen der hohen Motorleistungen sind die seitens der Bedienungsperson aufzubringenden Pedalkräfte zum Ein- und Ausrücken der Kupplung beträchtlich, so daß eine leichte und feinfühlige Betätigung nahezu ausgeschlossen ist.

Um den vorstehend genannten Nachteilen wirksam zu begegnen, hat man hilfskraftbetätigte Kupplungseinrichtungen entwickelt. Aus der DE-C-32 02 235 ist eine derartige Einrichtung bekannt geworden. Das Einrücken der Kupplung wird dem Fahrer durch Aufschalten einer hydraulischen Hilfskraft bei Betätigung des Kupplungspedals zum Öffnen der Kupplung erleichtert. Mit dieser Lösung ist zwar eine Reduzierung der aufzubringenden Pedalkräfte möglich, jedoch ist dieser Vorteil mit einem erheblichen baulichen Mehraufwand verbunden, da neben einer hydraulischen Verstelleinheit ein Druckanschluß an einer ständig Drucköl führenden Leitung vorgesehen sein muß. Da die Kupplung indirekt mit dem Kupplungspedal verbunden ist, setzt diese Art der Kupplungsbetätigung zudem eine gewisse Gewöhnung voraus.

Bei der in der europäischen Patentanmeldung EP-A-02 55 614 dargestellten und beschriebenen Kupplungseinrichtung kommt eine naß laufende Lamellenkupplung als Anfahr- und Schaltkupplung zur Anwendung. Die Einrichtung ist derart ausgelegt, daß der Ausrückvorgang der Lamellenkupplung zwei-phasig abläuft. In der ersten Phase wird über das Kupplungspedal ein Geberzylinder betätigt, der über eine Hydraulikleitung an einen Kolbenringraum eines Dosierkolbens angeschlossen ist. Unter stetigem Anstieg der am Kupplungspedal aufzubringenden Pedalkraft wird so lange gegen die Kraft einer das Lamellenpaket zusammenpressenden Tellerfeder gearbeitet, bis diese Anpreßkraft gerade überwunden ist. Im weiteren Verlauf der Schwenkbewegung des Kupplungspedals wird ein Elektroschalter geschlossen, so daß ein Absperrventil in seine Öffnungsstellung geschaltet wird. In dieser Stellung fördert eine Pumpe über eine weitere Hydraulikleitung Druckmittel in einen Kolbenringraum eines zusätzlichen Lüftkolbens, der das vollständige Öffnen der Lamellenkupplung mit einem vorgegebenen Lüftspiel besorgt. Ein als Druckwaage arbeitendes Druckbegrenzungsventil soll sicherstellen, daß der Druckaufbau im jeweiligen Kolbenringraum des Dosier- bzw. Lüftkolbens gleichmäßig erfolgt. Die Arbeitsweise des zusätzlichen Lüftkolbens muß exakt auf die des Dosierkolbens abgestimmt sein, was angesichts eines auftretenden Lamellenverschleißes nicht ohne weiteres möglich ist. Der Einsatz von gewellten Lamellen ist nicht möglich, weil der für die erste Kupplungsphase erforderliche Weg zu groß wäre. Zusammengefaßt setzt diese Anordnung neben einem doch bemerkenswerten baulichen Aufwand (zwei Hydraulikkolben, zusätzliches Druckbegrenzungs- und Wegeventil, Anschlag und Elektroschalter) eine feine Abstimmung, die von Zeit zu Zeit justiert werden muß, voraus.

Schließlich ist aus der EP-A-0 207 597 eine Reibungskupplung für ein Kraftfahrzeug bekannt geworden, deren Betätigung über eine Tellerfeder und ein Druckelement erfolgt. Die Zungen der Tellerfedern verlaufen im Bereich des Druckstücks zwar gekrümmt, jedoch verändert sich die Position der Anlagepunkte im Verlaufe des Stellweges des Druckstückes praktisch nicht. Die bekannte Ausbildung des Druckstückes ist daher nicht geeignet, den Verlauf der Pedalkraft gezielt zu beeinflussen.

Von der vorstehend geschilderten Anordnung ausgehend liegt der vorliegenden Erfindung die Aufgabe zugrunde, eine pedalbetätigbare Kupplungseinrichtung zur Betätigung einer Lamellenkupplung zu schaffen, bei der die am Kupplungspedal aufzubringende Kraft zum Ausrücken der Kupplung im Verlauf des Kupplungspedalweges im wesentlichen konstant bleibend ist. Erfindungsgemäß wird dies dadurch erreicht, daß das Druckstück zur Abstützung des anliegenden Teils der Tellerfeder eine Formgebung mit einem derartigen Verlauf aufweist, daß der Anlagepunkt des Teils der Tellerfeder im gekrümmt verlaufenden Bereich des Druckstückes abrollt, so daß die am Kupplungspedal im Öffnungssinne der Kupplung aufzubringende Pedalkraft als Produkt der kleiner werdenden Federkraft und der sich verändernden Übersetzung des Gestänges (Betätigungseinrichtung und Druckstück) im wesentlichen konstantbleibend ist, bezogen auf den Weg des Kupplungspedals.

Die vorgeschlagene Lösung geht von der Verwendung preiswerter Tellerfedern aus. Diese Tellerfedern sind so auszulegen, daß die Federkraft mit zunehmendem Federweg absinkt. Durch entsprechende Formgestaltung des Druckstücks ist es möglich, die Tellerfeder beim Ausrücken der Kupplung so in Anlage am Druckstück zu halten, daß die Gesamtübersetzung und damit der Verlauf der am Kupplungspedal aufzubringenden Kräfte exakt vorherbestimmt werden kann. Hierbei ist insbesondere von Vorteil, daß sich die Lösung insgesamt mit einem geringen baulichen Aufwand verwirklichen läßt.

Um die am Kupplungspedal aufzubringende Kraft möglichst konstant zu halten, ist es besonders vorteilhaft, die Gesamtübersetzung so auszulegen, daß sie - bezogen auf den Weg des Kupplungspedals - einen abnehmenden Verlauf aufweist. Zur Erzielung einer üblichen Pedalkraft hat sich herausgestellt, daß die Gesamtübersetzung um den Faktor 0,5 bis 0,7 zu verringern ist. Bei einem praktischen Ausführungsbeispiel hat sich eine von i = ca. 40 auf i = ca. 20 abnehmende Gesamtübersetzung als besonders vorteilhaft herausgestellt, um eine Pedalkraft von etwa 170 N bis 150 N zu erzielen.

Weitere vorteilhafte Merkmale der Erfindung sind der nachfolgenden Erläuterung eines Ausführungsbeispiels der Erfindung anhand der Zeichnungen zu entnehmen.

Es zeigen:

Fig. 1 eine pedalbetätigbare Kupplungseinrichtung im Halbschnitt und

Fig. 2 den Verlauf der Kennlinie einer Tellerfeder, wie sie bei der Anordnung nach Fig. 1 zur Anwendung gelangt.

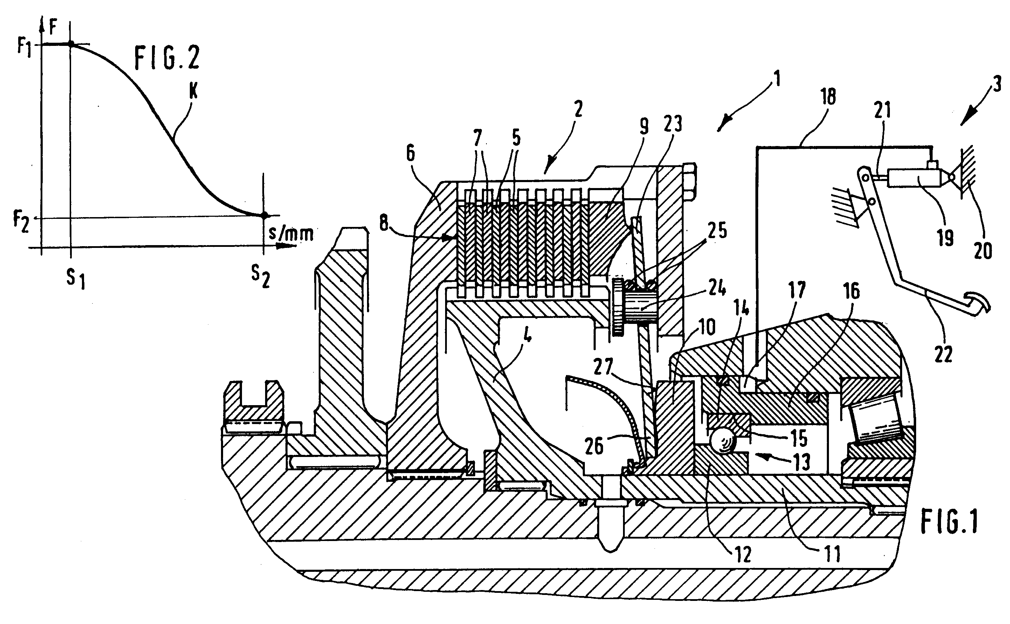

In Fig. 1 ist in schematischer Darstellung eine pedalbetätigbare Kupplungseinrichtung 1 im Halbschnitt dargestellt. Die Kupplungseinrichtung 1 besteht hierbei im wesentlichen aus einer Lamellenkupplung 2 und einer Betätigungsvorrichtung 3.

Die Lamellenkupplung 2 setzt sich in bekannter Weise aus einem Träger 4 für die Innenlamellen 5 und einem glockenförmigen Träger 6 für die Außenlamellen 7 zusammen. Die Innen- und Außenlamellen 5 und 7 bilden zusammen ein Lamellenpaket 8, das von einer Druckplatte 9 abgeschlossen wird. Der Druckplatte 9 ist diametral gegenüberliegend ein Druckstück 10 zugeordnet. Das Druckstück 10 ist axial verschiebbar auf dem hülsenförmigen Teil 11 des Trägers 4 montiert. Mit seiner in der Zeichnung rechts liegenden ringförmigen Stirnfläche stützt es sich am Innenring 12 eines Axiallagers 13 ab. Ein Außenring 14 des Axiallagers 13 ist in einer Bohrung 15 eines Kolbens 16 geführt. Ein Kolbenringraum 17 des Kolbens 16 steht über eine Hydraulikleitung 18 mit einem Geberzylinder 19 in Verbindung. Der Geberzylinder 19 ist im Bereich einer Fahrerplattform 20, die schematisch angedeutet ist, ortsfest schwenkbeweglich befestigt und steht anderenends über eine Kolbenstange 21 mit dem als Doppelhebel ausgebildeten Kupplungspedal 22 in Verbindung. Die vorstehend aufgeführten Bauelemente bilden insgesamt die eingangs erwähnte Betätigungseinrichtung 3.

Eine Tellerfeder 23 liegt im Bereich ihres äußeren Umfangs an der Druckplatte 9 und im Bereich ihres inneren Umfangs am Druckstück 10 an. Zusätzlich ist sie auf Bolzen 24, die Bestandteil des äußeren Lamellenträgers 6 sind, unter seitlicher Abstützung an Wälzringen 25 geführt.

Die in Fig. 2 schematisch wiedergegebene Kennlinie K der Tellerfeder 23 zeigt von einem Federweg S1 und einer Federkraft F1 ausgehend einen kontinuierlich abnehmenden Verlauf, so daß bei einem Federweg S2 eine reduzierte Federkraft F2 vorliegt.

Um die am Kupplungspedal 22 durch den Fahrer aufzubringende Pedalkraft gezielt zu beeinflussen - bezogen auf den Verschiebeweg des Druckstücks 10 in Axialrichtung zum Öffnen der Lamellenkupplung 2 - weist das Druckstück 10 zur Abstützung des an ihm anliegenden Teils 26 der Tellerfeder 23 eine Formgebung auf, bei der die am Kupplungspedal 22 im Öffnungssinne aufzubringende Pedalkraft als Produkt der kleiner werdenden Federkraft (vergleiche Fig. 2) und der Übersetzung des Gestänges (Betätigungseinrichtung 3 und Druckstück 10) einen definierten Verlauf hat. Somit wird mit dieser Ausführung Betätigungsarbeit zum Öffnen der Kupplung eingespart. Mit zunehmender axialer Verschiebung des Druckstücks 10 wird der Auswirkung der kleiner werdenden Federkraft der Tellerfeder 23 dadurch entgegengewirkt, daß der wirksame Hebelarm des am Druckstücks 10 anliegenden Teils 26 der Tellerfeder 23 stetig verringert wird. Dies ist durch die stetige Verlagerung des Anlagepunktes des Teils 26 am Druckstück 10 radial nach außen hin - bezogen auf das Zentrum der Tellerfeder 23 - in der Weise möglich, daß der der Tellerfeder 23 zugewandte Bereich 27 des Druckstücks 10 eine im wesentlichen radienförmige Krümmung aufweist, wie dies aus der Zeichnung entsprechend Fig. 1 ohne weiteres ersichtlich ist. Durch die Verlagerung der Anlage des Druckstücks 10 am Teil 26 der Tellerfeder 23 findet insgesamt eine Verringerung der Übersetzung statt, so daß die am Kupplungspedal aufzubringende Pedalkraft bei sich verringernder Federkraft der Tellerfeder 23 nicht, wie dies bei gleichbleibend unveränderter Übersetzung der Fall wäre, gleichermaßen verringert wird. Vielmehr wird die aufzubringende Pedalkraft relativ erhöht, so daß sie - bezogen auf den Weg des Kupplungspedals 22 - im wesentlichen konstant bleibt.

Bei einem praktischen Ausführungsbeispiel der Kupplungseinrichtung findet eine naß laufende Lamellenkupplung Verwendung, bei der die Federkraft der Tellerfeder vom F1 = 7 130 N (Kupplung geschlossen) auf F2 = 3 000 N (Kupplung geöffnet) abfällt. Die Gesamtübersetzung (Änderung der Federhebelübersetzung und Übersetzung der Betätigungseinrichtung) beträgt zu Beginn der Ausrückbewegung i = 38. Sie fällt auf einen Wert von i = 22 bei vollständig geöffneter Lamellenkupplung ab. Die Pedalkraft bewegt sich hierbei in einem Bereich von anfänglich 169 N bis 152 N.

Neben der gezielten Beeinflussung des Verlaufs der Pedalkraft zeichnet sich die erfindungsgemäße Anordnung durch weitere Vorteile aus. Die Lamellenkupplung 2 wird von der Tellerfeder 23 im Schließsinne beaufschlagt, so daß das Fahrzeug bedarfsweise angeschleppt werden kann, ohne daß eine Erhöhung der Kupplungskräfte eintritt. Die Kupplungsbetätigung erfolgt durch Muskelkraft, so daß der Druckpunkt am Kupplungspedal gut wahrgenommen werden kann. Ebenfalls treten keine Ansprechzeiten auf.

Bezugszeichen

| 1 | Kupplungseinrichtung |
|---|---|
| 2 | Lamellenkupplung |
| 3 | Betätigungsvorrichtung |
| 4 | Träger der Innenlamellen 5 |
| 5 | Innenlamellen |
| 6 | Träger der Außenlamellen 7 |
| 7 | Außenlamellen |
| 8 | Lamellenpaket |
| 9 | Druckplatte |
| 10 | Druckstück |
| 11 | hülsenförmiger Teil des Trägers 4 |
| 12 | Innenring |
| 13 | Axiallager |
| 14 | Außenring |
| 15 | Bohrung |
| 16 | Kolben |
| 17 | Kolbenringraum |
| 18 | Hydraulikleitung |
| 19 | Geberzylinder |
| 20 | Fahrerplattform |
| 21 | Kolbenstange |
| 22 | Kupplungspedal |
| 23 | Tellerfeder |
| 24 | Bolzen |
| 25 | Wälzringe |
| 26 | Teil der Tellerfeder 23 |
| 27 | der Tellerfeder 23 zugewandte Bereich |
| K | Kennlinie der Tellerfeder 23 |
| S1, S2 | Federwege |
| F1, F2 | Federkräfte |

**Patentansprüche**

1. Pedalbetätigbare Kupplungseinrichtung (1) für motorgetriebene Fahrzeuge, insbesondere Schlepper, bei der die Pedalkraft unter Verwendung eines Gestänges (Betätigungseinrichtung 3) auf ein Druckstück (10) der Kupplung (2) gegen die Kraft einer Tellerfeder (23), die die Reibelemente (5, 7) der Kupplung (2) im Schließsinne belastet, im Öffnungssinne der Kupplung (2) übertragbar ist, wobei die Kennlinie (K) der Tellerfeder (23) eine im Öffnungssinne der Kupplung (2) kleiner werdende Federkraft (F) aufweist, dadurch **gekennzeichnet,** daß das Druckstück (10) zur Abstützung des anliegenden Teils (26) der Tellerfeder (23) eine Formgebung mit einem derartigen Verlauf aufweist, daß der Anlagepunkt des Teils (26) der Tellerfeder (23) im gekrümmt verlaufenden Bereich (27) des Druckstückes (10) abrollt, so daß die am Kupplungspedal (22) im Öffnungssinne der Kupplung (2) aufzubringende Pedalkraft als Produkt der kleiner werdenden Federkraft (F) und der sich verändernden Übersetzung (i) des Gestänges (Betätigungseinrichtung 3 und Druckstück 10) im wesentlichen konstantbleibend ist, bezogen auf den Weg des Kupplungspedals (22).

2. Kupplungseinrichtung nach Anspruch 1, dadurch **gekennzeichnet,** daß die Formgebung des Druckstücks (10) in seinem gekrümmt verlaufenden Bereich (27) radienförmig ist.

3. Kupplungseinrichtung nach den Ansprüchen 1 und 2, dadurch **gekennzeichnet,** daß die gesamte Übersetzung (i) des Gestänges als Quotient des Wegs des Kupplungspedals (22) und des Wegs der Reibelemente (5,7) bis zum vollständigen Lüften der Kupplung (2) - bezogen auf den Weg des Kupplungspedals (22) im Öffnungssinne der Kupplung (2) - einen abnehmenden Verlauf aufweist.

4. Kupplungseinrichtung nach Anspruch 3, dadurch **gekennzeichnet,** daß die Gesamtübersetzung (i) bei geöffneter Kupplung (2) um den Faktor 0,5 bis 0,7 gegenüber dem Wert bei geschlossener Kupplung (2) verringert ist.

5. Kupplungseinrichtung nach den Ansprüchen 3 und 4, dadurch **gekennzeichnet,** daß die Gesamtübersetzung (i) bei einem Weg zum vollständigen Lüften der Kupplung von ca. 4 mm von i = ca. 40 auf i = ca. 20 abnimmt.

6. Kupplungseinrichtung nach mindestens einem der vorhergehenden Ansprüche 1 bis 5, dadurch **gekennzeichnet,** daß die am Kupplungspedal (22) im Öffnungssinne aufzubringende Kraft etwa 170 N bis 150 N beträgt.

7. Kupplungseinrichtung nach mindestens einem der vorhergehenden Ansprüche 1 bis 6, dadurch **gekennzeichnet,** daß die Kupplung (2) eine naß laufende Lamellenkupplung ist.

## Claims

1. Pedal-operated clutch device (1) for motor vehicles, in particular for agricultural tractors, in which the force applied to the pedal is transmitted through a linkage (operating device 3) onto a pressure piece (10) of the clutch (2) thereby moving the clutch (2) against the force of a disk spring (23) and loading the friction elements (5, 7) of the clutch (2) in the direction of closing, whereby the force applied to the pedal can be transmitted in the direction of opening of the clutch (2) and the characteristic curve (K) of the disk spring (23) has a negative gradient spring force (F) in the direction of opening of the clutch (2),
characterized in that, the shape of the pressure piece (10) for supporting the contacting part (26) of the disk spring (23) is such that the contacting part (26) of the disk spring (23) rolls along the curving profile area (27) of the pressure piece (10) so that the force to be applied on the clutch pedal (22) in the direction of opening of the clutch (2) principally remains constant as a product of the reduced spring force (F) and the changing ratio (i) of the linkage (operating device 3 and pressure piece 10), related to the travel of the clutch pedal (22).

2. A clutch device in accordance with Claim 1, characterized in that, the shape of the pressure piece (10) in its curved area (27) is that of a radius.

3. A clutch device in accordance with Claim 1 and Claim 2, characterized in that,
the overall ratio (i) of the linkage is a quotient of the travel of the clutch pedal (22) and of the travel of the friction elements (5, 7) until the clutch (2) is fully separated - related to the travel of the clutch pedal (22) in the direction of opening of the clutch (2) - and has a negative profile.

4. A clutch device in accordance with Claim 3, characterized in that, the overall ratio (i) with the clutch (2) open is less than the value with the clutch (2) closed by a factor of 0.5 to 0.7.

5. A clutch device in accordance with Claim 3 and Claim 4, characterized in that, the overall ratio (i) falls from i = approx. 40 to i = approx. 20 with a travel of approx. 4 mm until the clutch is fully opened.

6. A clutch device in accordance with one or more of the abovementioned Claims 1 to 5,
characterized in that, the force to be applied to the clutch pedal (22) in the direction of opening is approximately 170 N to 150 N.

7. A clutch device in accordance with at least one of the abovementioned Claims 1 to 6,
characterized in that, the clutch (2) is a multi-disk clutch for operating in wet condition.

## Revendications

1. Dispositif d'embrayage (1) à commande par pédale pour véhicules à moteur, notamment pour tracteurs, dans lequel la force de la pédale est transmissible dans le sens d'ouverture de l'embrayage (2) au moyen d'une timonerie (dispositif de commande 3) sur un poussoir (10) de l'embrayage (2) contre la force d'un ressort à diaphragme (23) qui charge les éléments de friction (5, 7) de l'embrayage (2), dans lequel la courbe caractéristique (K) du ressort à diaphragme (23) montre une force élastique (F) qui décroît dans le sens d'ouverture de l'embrayage (2), caractérisé en ce que le poussoir (10) présente, pour s'appuyer contre la partie adjacente (26) du ressort à diaphragme (23), une conformation suivant un profil tel que le point d'appui de ladite partie (26) du ressort à diaphragme (23) se déplace par déroulement sur la zone à profil courbe (27) du poussoir (10), de sorte que la force à exercer sur la pédale d'embrayage (22) dans le sens d'ouverture de l'embrayage (2), résultant du produit de la force élastique décroissante (F) et de la démultiplication variable (i) de la timonerie (dispositif de commande 3 et poussoir 10) reste sensiblement constante sur la course de la pédale d'embrayage (22).

2. Dispositif d'embrayage selon la revendication 1, caractérisé en ce que la conformation du poussoir (10) dans sa zone à profil courbe (27) a un profil circulaire.

3. Dispositif d'embrayage selon les revendications 1 et 2, caractérisé en ce que le rapport de transmission global (i) de la timonerie, défini comme le quotient entre la course de la pédale d'embrayage (22) et la course des éléments de friction (5, 7) jusqu'à ce que l'embrayage (2) soit complètement aéré - en ce qui concerne la course de la pédale d'embrayage (22) dans le sens d'ouverture de l'embrayage (2) - présente une variation décroissante.

4. Dispositif d'embrayage selon la revendication 3, caractérisé en ce que le rapport de transmission global (i) pour l'embrayage ouvert (2) est réduit d'un facteur de 0,5 à 0,7 par rapport à sa valeur pour l'embrayage fermé (2).

5. Dispositif d'embrayage selon les revendications 3 et 4, **caractérisé** en ce que le rapport de transmission global (i) décroît de i = env. 40 à i = env. 20 pour une course d'environ 4 mm jusqu'à ce que l'embrayage soit complètement aéré.

6. Dispositif d'embrayage selon au moins l'une des revendications 1 à 5, **caractérisé** en ce que la force à exercer sur la pédale d'embrayage (22) dans le sens d'ouverture est d'environ 170 N à 150 N.

7. Dispositif d'embrayage selon au moins l'une des revendications 1 à 6, **caractérisé** en ce que l'embrayage (2) est un embrayage multidisque humide.

FIG.2

FIG.1

EP 0 457 826 B1